# EUROPÄISCHE PATENTSCHRIFT

(11) **EP 1 872 662 B1**
(45) Veröffentlichungstag und Bekanntmachung des Hinweises auf die Patenterteilung: **05.08.2020**
(21) Anmeldenummer: 07012340.1
(22) Anmeldetag: 23.06.2007
(51) Int. Cl.: A22C 13/00

(54) **Schlauchförmige Nahrungsmittelhülle mit rauchdurchlässiger Klebenaht**
Tubular food casing having a smoke-permeable glued seam
Enveloppe tubulaire pour aliments perméable à la fumée avec suture collée

(30) Priorität: 27.06.2006 DE 102006029400
(43) Veröffentlichungstag der Anmeldung: 02.01.2008
(73) Patentinhaber: Kalle GmbH, 65203 Wiesbaden (DE)
(72) Erfinder: Fögler, Jens, 65232 Taunusstein (DE); Gord, Herbert, 55218 Ingelheim (DE); Seelgen, Michael, 65510 Idstein (DE); Büker, Gert, 75428 Illingen (DE); Büker, Marion, 75428 Illingen (DE)
(74) Vertreter: Plate, Jürgen

(56) Entgegenhaltungen:
- EP-B1- 0 101 892
- EP-B1- 0 676 143
- WO-A1-2005/063027
- DE-A1- 3 244 372
- DE-A1- 10 360 610
- DE-A1-102004 022 975
- DE-C- 691 342
- US-A- 4 401 135

## Beschreibung

Die Erfindung betrifft eine rauchdurchlässige, schlauchförmige Nahrungsmittelhülle mit geklebter Naht, ein Verfahren zu ihrer Herstellung sowie ihre Verwendung als künstliche Wursthülle.

Schlauchförmige Nahrungsmittelhüllen auf Basis von regenerierter Cellulose mit einer Innenverstärkung aus einem Faserpapier, insbesondere aus Hanffaserpapier, sind seit langem bekannt (s. B.-A. Lang, G. Effenberger, Wursthüllen - Kunstdarm, 3. Aufl. [2006] Deutscher Fachverlag, Frankfurt a.M., S. 51 - 54). Sie werden allgemein als künstliche Wursthüllen verwendet und sind meistens auch rauchdurchlässig. Hergestellt werden diese Hüllen nach dem Viskoseverfahren.

Als Alternative zum Viskoseverfahren wurde das Aminoxid-Verfahren entwickelt. Darin wird die Cellulose nicht mehr chemisch derivatisiert, wie im Viskoseverfahren, sondern rein physikalisch gelöst in einem wäßrigen Aminoxid, insbesondere in N-Methyl-morpholin-N-Oxid(NMMO)-Monohydrat. Die in dem wäßrigen Aminoxid gelöste Cellulose kann, wie im Viskoseverfahren, auf ein zu einem Schlauch geformtes, bahnförmiges Fasermaterial aufgebracht werden. Der so beschichtete Schlauch wird dann durch verschiedene Fäll- und Waschbäder geführt. Das Fällbad enthält üblicherweise verdünntes (d.h. etwa 10 bis 20 gew.-%iges), wäßriges Aminoxid.

Bekannt sind auch künstliche Wursthüllen auf Textilbasis, beispielsweise aus einem Baumwoll-Rundgestrick, das auf der Außenseite mit Kollagen imprägniert ist (DE-C 33 33 387).

In der JP-A 51-079748 sind Laminate offenbart aus einem porösen, bahnförmigen Trägermaterial, beispielsweise aus Papier, Textilmaterial oder einer porösen Folie, und einer Folie aus wasserlöslichen Polysacchariden, Proteinen und/oder synthetischen Harzen. Als Polysaccharide sind insbesondere Mannan, Chitin, Alginsäure und Pectin genannt. Als Beispiele für Proteine sind Collagen, Gelatine und Casein erwähnt, als Beispiele für synthetische Harze Polyvinylalkohol, Polyacrylsäure, Polyacrylamid und Polyvinylpyrrolidon. Die Laminate werden zu Nahrungsmittelhüllen, darunter auch Wursthüllen, verarbeitet. Die Hüllen zeigen eine verbesserte Räucherbarkeit, eine hohe Transparenz und eine zufriedenstellende Festigkeit. Laminate haben aber oft den Nachteil, daß die Haftung zwischen den einzelnen Schichten nicht ausreicht.

Weiterhin sind Hüllen bekannt, bei deren Herstellung ein bahnförmiges Flachmaterial zu einem Schlauch geformt wird, dessen - in der Regel überlappende - Längskanten nach allgemein bekannten Verfahren, wie Kleben, Siegeln, Nähen, miteinander verbunden werden.

So ist in der EP 0 101 892 B1 eine Wursthülle aus gegebenenfalls faserverstärkter Cellulose offenbart, die eine längsaxial verlaufende Klebenaht aufweist. Die Klebenaht ist mit einem Klebstoff hergestellt, der ein wasserunlösliches Kondensationsprodukt von Polyamidpolyamin, aliphatischem Polyamin oder Polyamid mit bifunktionellen Halohydrinen oder deren Derivaten, wie Epichlorhydrin, umfaßt. Die Klebestoffschicht kann vorgefertigt sein und von einem Trägerband mit antiadhäsiven Oberflächen auf die Überlappungsfläche der zu einem Schlauch geformten Cellulosebahn übertragen werden (DE 32 44 372 A1). Eine solche Wursthülle ist auch im Bereich der Klebenaht rauchdurchlässig, hat jedoch den Nachteil, daß die Bräthaftung im Nahtbereich nicht identisch ist mit der Bräthaftung am Wurstumfang.

Weitere Beispiele einer rauchdurchlässigen, schlauchförmigen Nahrungsmittelhülle sind aus den Dokumenten US 4 401 135 A und WO 2005/063027 A1 bekannt.

Beim Verkleben wird die Klebenaht vielfach mit Hilfe eines Hotmelt-Klebers hergestellt. Nachteil dieser Hotmelt-Klebenähte ist, daß sie nicht rauchdurchlässig sind. Nach dem Räuchern ist die Oberflächenfarbe der Wurst unter der Klebenaht heller als außerhalb des Klebebereiches. Ein weiterer Nachteil der Hotmelt-Klebenaht ist, daß sie nicht transparent ist, auch nicht nach dem Füllen der Hülle mit einem fetthaltigen Nahrungsmittel.

Es bestand daher die Aufgabe, eine Nahrungsmittelhülle zu entwickeln, die die geschilderten Nachteile nicht mehr aufweist. Nach dem Räuchern soll sich der unter der Naht liegende Bereich der Nahrungsmitteloberfläche in seiner Farbe nicht von den übrigen Bereichen unterscheiden, d.h. die Naht soll durchlässig sein für Kalt-, Warm- und Heißrauch.

Gegenstand der vorliegenden Erfindung ist demgemäß eine rauchdurchlässige, schlauchförmige Nahrungsmittelhülle mit den technischen Merkmalen des Anspruchs 1, sowie ein Verfahren zu ihrer Herstellung gemäß Anspruch 18.

Basismaterial für die Nahrungsmittelhülle ist ein filmbildendes Material, das natürlichen, teilsynthetischen oder vollsynthetischen Ursprungs sein kann. Dazu gehören insbesondere Proteine (wie Kollagen oder Gelatine), daneben auch Cellulose, Stärke oder Stärkederivate (wie Stärkeacetat) und Poly(meth)acrylate. Bevorzugt werden Proteine als filmbildendes Material eingesetzt.

Als Mittel zum Verkleben werden bevorzugt Blutplasma, Kollagen, Gelatine, Eiweiß, Casein (Milcheiweiß), Sojaprotein, Eiklar, Molke, Gluten (Weizenprotein), Zein (Maisprotein), Ardein (Erdnußprotein), Erbsenprotein, Baumwollsamen- oder Fischprotein, Eiweiß aus Muscheln, Algen, Pilzen oder sonstigen Biomaterialien aus Meerestieren, eingesetzt. Es können auch Mischungen der genannten Mittel zum Einsatz kommen. Zusätzlich zu dem Protein kann der Kleber andere Kleber enthalten. Art und Menge der zusätzlichen Kleber sind so zu bemessen, daß die Rauchdurchlässigkeit, möglichst auch die Transparenz der Klebenaht nicht beeinträchtigt ist. Solche weiteren Kleber sind beispielsweise Acrylat-Kleber. Eine besonders feste Klebenaht wird erhalten, wenn die Proteine zusätzlich vernetzt werden, insbesondere durch Einwirkung von UV-Strahlung bzw. durch Koagulation.

Neben einem oder mehreren Protein(en) kann der Klebstoff noch Füllstoffe enthalten, wie sie auch mit den filmbildenden Materialien vermischt sein können.

Die Klebenaht ist praktisch transparent, zumindest nach dem Füllen der Hülle mit einem fetthaltigen Lebensmittel. Hüllen, die mit den genannten proteinhaltigen Klebstoffen hergestellt sind, können in bekannter Weise geräuchert werden. Sie zeigen dann über den gesamten Umfang der Wurst einen gleichmäßigen Rauchübertrag auf die Oberfläche. Somit ist an der Oberfläche einer geräucherten Wurst kein Farbunterschied zwischen Umfang und Nahtbereich zu erkennen.

Die Hülle weist eine besonders hohe mechanische Festigkeit auf, wenn sie zusätzlich eine flächenförmige Einlage umfaßt. Die Einlage ist allgemein mit dem filmbildendem Material beschichtet. Bei der Einlage handelt es sich bevorzugt um ein verfestigtes Vlies oder Spinnvlies, das gegebenenfalls imprägniert ist. Besonders zu nennen sind Faserpapiere, speziell Hanffaserpapiere, die durch Imprägnieren mit synthetischen Harzen naßfest gemacht wurden. Durch eine Imprägnierung kann auch die Haftung an dem filmbildenden Material verbessert werden.

Eine (weitere) ein- oder beidseitige Imprägnierung kann nach dem Aufbringen des filmbildenden Materials auf die flächenförmige Einlage vorgenommen werden und zwar bevor oder nachdem die beschichtete Einlage zu einem Schlauch verarbeitet wurde. Mit dieser Art von Imprägnierung kann beispielsweise die Bräthaftung eingestellt oder die Schimmelresistenz erhöht werden. Die Imprägnierung kann auch übertragbare Farb-, Aroma-, Geruchs- und/oder Geschmackskomponenten umfassen (beispielsweise Flüssigrauch).

Erfindungsgemäß ist die Einlage ein Gewebe, Gewirke, Gestricke oder Gelege oder auch eine poröse Folie. Die flächenförmige Einlage kann aus Natur- und/oder Kunstfasern bestehen. Bevorzugte Materialien sind Baumwolle, Regenerat-Cellulose (Zellwolle), Seide, Polyester, Polyamid, Polyolefin (insbesondere Polypropylen), Polyvinylacetat, Polyacrylnitril, Polyvinylchlorid sowie die entsprechenden Copolymere. Auch Gemische verschiedener Materialen lassen sich einsetzen (z.B. Gemische aus Zellwolle und Polyester). All diese Einlagematerialien können imprägniert sein. Eine Imprägnierung kann beispielsweise erreicht werden durch einen Haftvermittler, der die Haftung der Beschichtung verbessert. Die Imprägnierungsmittel werden in einer geringen Menge verwendet, d.h. die Menge reicht in keiner Weise aus, um die Zwischenräume der flächenförmigen Einlage auszufüllen.

Unter dem Begriff "flächenförmig" sollen Materialien verstanden werden, die relativ dünn, jedoch selbsttragend sind und sich mit oder ohne Beschichtung zu einem Schlauch formen lassen. Dicke und Flächengewicht der flächenförmigen Einlage sind abhängig von der späteren Verwendung der Hülle. Allgemein beträgt das Flächengewicht 3 bis 1.000 g/m², bevorzugt 10 bis 130 g/m², besonders bevorzugt 12 bis 75 g/m². Ist die flächenförmige Einlage ein Faserpapier, dann hat dieses bevorzugt ein Gewicht von 17 bis 29 g/m². Je nach Anforderung ist das Trägermaterial mehr oder weniger dehnbar oder praktisch nicht dehnbar. Nicht dehnbare flächenförmige Einlagen sind sinnvoll für Hüllen, bei denen es auf besonders hohe Kaliberkonstanz ankommt. Gegebenenfalls besteht die Einlage wiederum aus 2 oder mehr Lagen aus gleichen oder verschiedenartigen Materialien, beispielsweise aus einem Faserpapier, das mit einem Textilmaterial verbunden ist.

Die flächenförmige Einlage wird ein- oder beidseitig mit einem oder mehreren filmbildenden Materialien beschichtet, wobei die dabei entstehende Schicht bzw. Beschichtung rauchdurchlässig ist. Rauchdurchlässige Beschichtungen können beispielsweise mit Protein, natürlichen oder synthetischen Polymeren, wie Poly(meth)acrylaten oder Cellulose, hergestellt werden. "Filmbildend" bedeutet, daß das Beschichtungsmedium eine durchgehende, zusammenhängende Beschichtung bilden kann.

Alternativ erfolgt die Herstellung der zu verklebenden Hüllen bzw. Flachbahnen ohne Trägermaterial. Hier sind insbesondere Kollagen und Cellulosehüllen bzw. Flachmaterialien zu nennen.

Die filmbildenden Beschichtungsmaterialien sind Proteine, wie Gelatine oder Kollagen. Gut geeignet sind aber auch Casein (Milcheiweiß), Sojaprotein, Gluten (Weizenprotein), Zein (Maisprotein), Ardein (Erdnußprotein), Erbsenprotein, Baumwollsamen-oder Fischprotein. Das Protein, insbesondere die Gelatine, ist bevorzugt mit einem anorganischen oder organischen Füllstoff abgemischt. Besonders geeignete anorganische Füllstoffe sind dabei Kreide, Kalksteinmehl, Calcit, gefälltes Calciumcarbonat, Magnesiumcarbonat, Bariumcarbonat, Dolomit oder/und andere Mischcarbonate. Besonders geeignete organische Füllstoffe sind feingemahlenes Cellulosepulver, Weizenkleie, native oder/ und thermoplastische Stärke (TPS) bzw. Stärkederivate. Im Bereich der nicht derivatisierten Stärke ist native oder/und thermoplastifizierte Mais- oder/und Kartoffelstärke bevorzugt. Stärkederivate sind beispielsweise Stärkeester, wie Stärkeacetate, -maleate, -propionate, -butyrate, -lauroate oder/ und -oleate, Stärkexanthogenate, -phosphate, -sulfate oder/und -nitrate, Stärkeether, wie Stärkemethylether, -ethylether, -propylether, -butylether, -alkenylether, -hydroxyethylether oder/und -hydroxypropylether, gepfropfte Stärken, insbesondere mit Maleinsäure- oder Bernsteinsäureanhydrid gepfropfte Stärke oder/und oxidierte Stärken, wie Dialdehydstärke, Carboxymethylstärke oder/und mit Persulfat abgebaute Stärke. Es können auch weitere Polysaccharide enthalten sein, insbesondere pflanzliche Pulver oder/und Fasern wie u.a. solche aus Baumwolle, Kapok, Flachs, Leinen, Hanf, Jute, Kenaf, Ramie, Sisal, Torf, Stroh, Weizen, Kartoffeln, Tomaten, Karotten, Kokos, Ananas, Äpfeln, Orangen, Fichten, Kiefern oder Kork.

Es ist jedoch hervorzuheben, daß die proteinhaltige Schicht bzw. Beschichtung keine regenerierte oder gefällte Cellulose enthält, sondern allenfalls, in untergeordneten Mengen von weniger als 5 Gew. -%, bezogen auf das Gewicht der Schicht bzw. Beschichtung, einen fein verteilten cellulosischen Füllstoff enthalten kann.

Gelatine wird durch Hydrolyse von Knochen- oder Hautprotein (in der Regel aus Rinderhaut und -knochen) gewonnen, wobei die tripel-helikale Struktur größtenteils zerstört wird. Das Molekulargewicht beträgt etwa 15.000 bis 250.000 g/mol, wobei die Molekulargewichtsverteilung einer Gauß-Kurve entspricht. Gelatine ist weitgehend wasserlöslich.

Der Anteil an Protein beträgt allgemein 2,5 bis 95 Gew.-%, bevorzugt 20 bis 80 Gew.-%, besonders bevorzugt 30 bis 75 Gew.-%, jeweils bezogen auf das Gesamtgewicht der nichtflüchtigen Bestandteile der Hülle, d.h. bezogen auf das Trockengewicht.

Neben dem Protein kann die Beschichtung weitere natürliche und/oder synthetische Polymere enthalten. Das sind insbesondere Polyacrylate, Polyvinylacetate und/oder (Co)Polymere mit Einheiten aus Vinylacetat, wobei ein mehr oder weniger großer Teil der Vinylacetat-Einheiten auch verseift sein kann. Diese Polymere können auch permanent weichmachende Eigenschaften haben. Solche auch als "primäre Weichmacher" wirkenden Verbindungen sind beispielsweise Alginate, Polyvinylpyrrolidone, quartäre Vinylpyrrolidon-Copolymere (®Gafquat), Copolymere mit Einheiten aus Vinylpyrrolidon, Maleinsäureanhydrid, Methylvinylether oder verzweigte Polysaccharide (wie Carrageenan). Der Anteil der weiteren Polymere beträgt allgemein bis zu 50 Gew.-%, bevorzugt 5 bis 40 Gew.-%, besonders bevorzugt 6 bis 25 Gew.-%, bezogen auf das Trockengewicht der Hülle.

Wenn das filmbildende Protein wasserlöslich ist, wie das beispielsweise bei Kollagen oder Gelatine der Fall ist, dann wird zusätzlich mindestens ein Vernetzer benötigt. Geeignete Vernetzer sind epoxidiertes Leinöl, Diketene mit langkettigen Alkylresten (allgemein mit (C₁₀-C₁₈)Alkylresten), Caramel, Tannin, Diepoxide, Citral, Aziridine, Verbindungen mit mindestens zwei Carbaldehyd-Gruppen (wie Glyoxal oder Glutardialdehyd) und/oder Polyamin-Polyamid-Epichlorhydrinharze, Acrylamide, Bis-acrylamide und Acrylmethylol sowie beliebige Mischungen davon, z.B. Acrylsäureramidmethylol und Bisacrylsäureamid-dimethylol. Durch die Vernetzung wird die Wasserlösslichkeit des filmbildenden Proteins reduziert oder aufgehoben.

Außerdem eignen sich für die Beschichtung von rauchdurchlässigen Bahnen Acrylharze und Kunststoff-Blends, speziell Emulsionspolymerisate auf Basis von (C₁-C₆)Alkyl(meth)acrylaten, insbesondere Butyl(meth)acrylat. Der Begriff (Meth)acrylat steht dabei wie üblich für Acrylat und/oder Methacrylat. Einheiten aus anderen Monomeren können hinzutreten, beispielsweise solche aus Styrol, α-Methyl-styrol oder Vinylacetat. Geeignete Acrylatharze sind dem Fachmann bekannt.

Ein weiteres gut geeignetes Beschichtungsmedium ist Viskose, die dann anschließend zur Cellulose regeneriert wird.

Auch Flachmaterialien ohne Träger lassen sich mit dem proteinhaltigen Klebstoff so verkleben, daß sich einer rauchdurchlässige Klebenaht bildet. Besonders bevorzugte Hüllen oder Flachmaterialien werden aus Cellulose oder aus Proteinen, wie Kollagen, hergestellt.

Die Beschichtung bzw. die Hülle oder Flachbahn kann Farbstoff und/oder Pigmente enthalten. Der Anteil der Farbstoffe und/oder Pigmente beträgt dabei allgemein 0,5 bis 12,0 Gew.-%, bevorzugt 1,0 bis 6,0 Gew.-%, jeweils bezogen auf das Trockengewicht der Hülle.

Gegebenenfalls enthält die Hülle zusätzlich Aroma-, Geschmacks- oder Geruchsstoffe, die auf das Brät übertragbar sein können. Zu nennen sind hier insbesondere Trocken- oder Flüssigrauch sowie Gewürze in fester oder flüssiger Form.

Um zu verhindern, daß die Hülle im aufgerollten Zustand verklebt, kann sie übliche Additive in untergeordneten Mengen (d.h. maximal etwa 10 Gew.-%, bezogen auf das Trockengewicht der Hülle) enthalten. Solche Additive sind beispielsweise Aluminiumsilikate, insbesondere Kaolin, Calciumcarbonat, Siliciumdioxid, ein PVC-Pigment, Wachse oderfette Öle. Andere Additive können dazu dienen, das gewünschte Ausmaß an Bräthaftung sicherzustellen. Wenn der Proteinanteil dafür nicht ausreicht, dann ist eine übliche Innenimprägnierung vorzunehmen, wie z.B. die Präparation mit 40 % ®Aquapel, um eine Trennwirkung zu erzielen.

Falls erforderlich, enthält die erfindungsgemäße Hülle zudem noch mindestens einen sekundären Weichmacher, bevorzugt Glycerin.

Die Dicke der Beschichtung(en) wird so gewählt, daß die Hülle beispielsweise die für Reifung der Wurst erforderliche Wasserdampf- und Sauerstoffdurchlässigkeit aufweist. Allgemein beträgt das Gewicht der Beschichtung nach dem Trocknen 10 bis 200 g/m², bevorzugt 20 bis 120 g/m², besonders bevorzugt 30 bis 100 g/m².

Die Hülle weist allgemein einen Wassergehalt von etwa 4 bis 20 Gew.-%, bevorzugt von etwa 8 bis 12 Gew.-%, auf. Die erfindungsgemäße Hülle kann dann vorbefeuchtet (auf einen Feuchteanteil von etwa 20 bis 30 Gew. -%) und in diesem Zustand an den Wursthersteller geliefert oder von diesem selbst vor dem Füllen gewässert werden. Je nach eingesetztem Trägermaterial ist ein Füllen auch ohne Wässerung möglich (z.B. textiles Trägermaterial).

Die Wasserdampfdurchlässigkeit (nach DIN 53 122) beträgt bei der erfindungsgemäßen Hülle 50 bis 2000 g/m²·d, bevorzugt 200 bis 1200 g/m²·d, und die Sauerstoffdurchlässigkeit 30 bis 1500 cm³/m²·d (bestimmt gemäß DIN 53 380 bei 65 % r.F.), gemessen an einem 5 cm² großen Stück der Hülle mit einem Wassergehalt von 8 bis 10 Gew.-% und einem Weichmachergehalt von etwa 15 Gew. -%. Die Wasserdurchlässigkeit liegt im Bereich von etwa 10 bis 100 l/m²·d, bevorzugt von 12 bis 20 l/m²·d bei 40 bar.

Das Dehnverhalten der Hülle wird ebenfalls durch die Art und Dicke der Beschichtung bestimmt, daneben jedoch auch durch Art und Flächengewicht der Verstärkungs-Einlage. So kann die Dehnung variieren zwischen 0,1 und 25 %, bevorzugt zwischen 1 und 5 %, gemessen jeweils in Längs- und Querrichtung.

Alternativ können Flachmaterialien, die keine flächenförmige Verstärkungs-einlage aufweisen, verklebt werden. Das sind insbesondere Flachmaterialien auf Basis von Cellulose oder Kollagen.

Verfahren und Vorrichtungen zur Herstellung der erfindungsgemäßen Hülle sind dem Fachmann bekannt.

Soweit ein Verstärkungsmaterial eingesetzt wird, kann dieses erst beschichtet und dann zu einem Schlauch geformt und verklebt werden oder umgekehrt.

In einer bevorzugten Ausführungsform wird das bahnförmige Trägermaterial ein- oder beidseitig beschichtet, beispielsweise durch Besprühen, Rakelantrag, Walzenantrag, Antragen mit Hilfe einer Breitschlitzdüse oder nach anderen, dem Fachmann geläufigen Beschichtungsverfahren. Dabei kann Beschichtungsmasse ein- oder mehrmals angetragen werden. Es ist möglich, bei jedem Antragen die gleiche Beschichtungsmasse oder verschiedene Beschichtungsmassen anzutragen. Die bei mehrfachem Antrag erhaltene Hülle wird als Mehrschichthülle bezeichnet. Das beschichtete Flachmaterial wird gegebenenfalls bedruckt. Soweit erforderlich, wird das beschichtete Flachmaterial in Bahnen passender Breite geschnitten. Die Bahnen werden dann mit Hilfe einer Formschulter zu schlauchförmigen Hüllen geformt, deren Längskanten mehr oder weniger stark überlappen. Der jeweils notwendige Überlappungsbereich wird auch durch das Kaliber bestimmt. Allgemein ist er relativ schmal und beträgt 1 bis10 mm, bevorzugt 3 bis 6 mm. Die überlappenden Längskanten werden durch ein geeignetes Auftragssystem mit dem Kleber beaufschlagt und miteinander verklebt. Im folgenden Verfahrensschritt erfolgt die Reaktion des Klebers. Die Reaktion des Klebers kann auf verschiedene Weisen erfolgen. Besonders bevorzugt erfolgt die Reaktion chemisch, durch Trocknung oder durch Denaturierung des Proteins. Die Denaturierung des Proteins erfolgt zweckmäßig bei einer Temperatur von 55 bis 100 °C, bevorzugt von 65 bis 90°C. Neben der Temperatur ist für die Festigkeit der Klebenaht ein ausreichender Anpressdruck in der Fügestelle erforderlich. Die Verklebung kann prinzipiell auch ohne Wärme- und Druckeinwirkung erfolgen, doch ist die Haltbarkeit der Klebenaht dann geringer.

In einer bevorzugten Ausführungsform, der Verklebung von Trägermaterialien die mit mindestens einem filmbildenden Protein beschichtet sind, ist die Klebenaht zusätzlich zur Rauchdurchlässigkeit auch noch transparent. Dies hat den Vorteil, daß an einer Wurst die Klebenaht für den Verbraucher praktisch nicht sichtbar ist, da Umfang und Klebenaht die gleiche Transparenz aufweisen.

Ein weiterer Vorteil der hier beschriebenen Verklebung im Vergleich zu einer mit Hotmelt verklebten Naht besteht darin, daß auch auf der Klebenaht ein Schimmelwachstum möglich ist. Das Schimmelwachstum im Nahtbereich ist dabei praktisch identisch zum Schimmelwachstum in den übrigen Bereichen der Hülle.

In einer weiteren Ausführungsform wird ein bahnförmiges Trägermaterial mit einer vorbestimmten Breite zunächst zu einem Schlauch geformt, beispielsweise mit einer Formschulter. Dabei kann der Schlauch zur Aufrechterhaltung seiner Form und zur Vermeidung eines Trocknungsschrumpfes mit Stützluft beaufschlagt oder mit Kaliberstützringen in seiner runden Form gehalten werden. Zur Fixierung des zum Schlauch geformten Trägermaterials wird beispielsweise mittels eines Klebefingers die Trägerbahn mit Blutplasma, Eiweiß, Gelatine, Kollagen usw. verklebt und das Trägermaterial anschließend von innen und/oder von außen "nahtlos" mit der Beschichtungsmasse beschichtet, beispielsweise mit Hilfe einer Ringschlitzdüse. Der Nahtbereich dieser Hülle ist dann nur unwesentlich dicker als die übrigen Bereiche. Die Arbeitsgänge Schneiden und Kleben von beschichteten Bahnen sind bei dieser Ausführungsform nicht erforderlich.

Alternativ dazu lassen sich Hüllen mit einer Längsnaht durch Aufschneiden eines großkalibrigen Schlauchs in Längsrichtung und Zerteilen des aufgeschnittenen Schlauchs in parallel verlaufende Bahnen erhalten. Die Verklebung der erhaltenen Flachbahnen erfolgt wie oben beschrieben. Auf diese Weise hergestellte Hüllen weisen eine besonders gleichmäßige Dehnung über den gesamten Umfang auf.

Hüllen mit einer naturdarmähnlichen Form oder einer anderen ungleichmäßigen Form lassen sich durch entsprechenden Zuschnitt der Flachbahnen erhalten. Sie weisen dann beispielsweise einen wechselnden Durchmesser und/oder unregelmäßge Konturen auf. Die Längskanten dieser Hüllen mit Sonderformen werden in der beschriebenen Weise mit dem proteinhaltigen Kleber verklebt.

Falls gewünscht, kann die erfindungsgemäße Nahrungsmittelhülle zusätzlich mit einem Netz umgeben werden. Solche Netze sind allgemein bekannt. Sie umfassen beispielsweise wabenförmige, 8-eckige, quadratische oder rechteckige Strukturen. Sie können auch elastisch sein.

Die erfindungsgemäße Hülle läßt sich mit den üblichen Füllmaschinen mit pastösen Nahrungsmitteln füllen, insbesondere mit Wurstbrät. Bei der Verwendung als Wursthülle wird sie zweckmäßig in geraffter Form (als sogenannte Raffraupe) oder in Form von Einzelabschnitten eingesetzt. Die Einzelabschnitte sind dabei an einem Ende verschlossen, beispielsweise durch einen Metall- oder Kunststoff-Clip, durch Abbinden mit Garn oder durch Abnähen. Die Abschnitte werden dann einzeln auf das Füllrohr der Füllvorrichtung geschoben, mit Brät gefüllt und verschlossen. Die Weiterverarbeitung kann dann wie üblich durch Brühen, Kochen, Räuchern, Reifen usw. erfolgen.

Teil der vorliegenden Erfindung ist demgemäß auch die Verwendung der erfindungsgemäßen Hülle als künstliche Wursthülle, insbesondere für Roh-, Brüh- oder Kochwurst, oder als Umhüllung für Käse.

Die nachfolgenden Beispiele dienen der Illustration der Erfindung. Prozente sind Gewichtsprozente, soweit nicht anders angegeben oder aus dem Zusammenhang ersichtlich.

### Beispiel 1

Ein Faservlies aus Hanffasern mit einem Flächengewicht von 19 g/m² wurde mit Gelatine beschichtet. Das Gesamtgewicht betrug 88 g/m². Die Flachbahn wurde durch Verkleben mit Gelatine zu einem Schlauch mit einem Durchmesser von 40 mm (= Kaliber 40) geformt. Die Verklebung erfolgte mit Gelatine, die unter Wärmeeinwirkung getrocknet wurde. Die Hülle wurde mit einem Salamibrät gefüllt und geräuchert. Nach einer Reifezeit der Wurst von 10 Tagen betrug der Gewichtsverlust 20%. Die Klebenaht war transparent und nicht sichtbar. Über den gesamten Umfang der Wurst war die Rauchübertragung gleichmäßig.

### Beispiel 2 (nicht erfindungsgemäß)

Ein Textilgewebe aus einem Baumwolle/Polyester-Gemisch mit einem Gewicht von 102 g/m² wurde mit einem Butylacrylat-Harz beschichtet und mit Eiweiß zu einer schlauchförmigen Hülle mit einem Durchmesser von 60 mm verklebt. Eine stabile Klebenaht wurde durch Koagulation des Eiweißes bei 85 °C erreicht. Die Hülle wurde mit Salamibrät gefüllt und mit Heißrauch geräuchert. Nach einer Reifezeit von 18 Tagen betrug der Gewichtsverlust 18%, die Rauchdurchlässigkeit war über den gesamten Umfang der Hülle einheitlich.

### Beispiel 3

Ein Faservlies aus Hanffasern mit einem Flächengewicht von 25g/m² wurde mit Kollagen beschichtet. Das Gesamtgewicht betrug 104 g/m². Die Flachbahn wurde durch Verkleben mit Blutplasma zu einem Schlauch mit einem Durchmesser von 50 mm geformt. Die entstandene Hülle wurde mit einem Salamibrät gefüllt und mit einer Schimmelreifung gereift. Nach einer Reifezeit der Wurst von 20 Tagen entstand ein Gewichtsverlust von 22%. Über den Umfang und über die Klebenaht trat ein absolut gleichmäßiges Schimmelwachstum auf. Ein Unterschied zwischen Naht und Umfang war hierbei, wie von den Wurstherstellern gefordert, nicht feststellbar.

## Patentansprüche

1. Rauchdurchlässige, schlauchförmige Nahrungsmittelhülle, die mit einer flächenförmigen Einlage verstärkt ist, wobei die flächenförmige Einlage ein verfestigtes Vlies oder Spinnvlies, ein Gewebe, Gewirke, Gestricke, Gelege oder eine poröse Folie ist, wobei die flächenförmige Einlage mit einem filmbildenden Protein beschichtet ist, jedoch keine regenerierte oder gefällte Cellulose, und daß die Hülle in Längsrichtung eine rauchdurchlässige transparente Klebenaht umfaßt, die mit einem im trockenen Zustand zu 10 bis 100 Gew.-% aus Protein bestehenden Klebstoff erzeugt ist, wobei das Protein Blutplasma, Kollagen, Gelatine, Casein, Sojaprotein, Gluten, Zein, Ardein, Erbsenprotein, Baumwollsamen- oder Fischprotein, Eiweiß aus Muscheln, Algen, Pilzen oder sonstigen Biomaterialien aus Meerestieren oder eine Mischung davon ist, wobei die beschichtete flächenförmige Einlage zu einer schlauchförmigen Hülle mit überlappenden Längskanten geformt ist und die überlappenden Längskanten mit dem Klebstoff beaufschlagt und miteinander verklebt sind, so dass die Rauchdurchlässigkeit über den gesamten Umfang der Hülle gleichmäßig ist.

2. Nahrungsmittelhülle gemäß Anspruch 1, **dadurch gekennzeichnet, daß** der Klebstoff im trockenen Zustand zu 50 bis 95 Gew.-%, bevorzugt zu 70 bis 90 Gew.-%, aus Protein bestehenden Klebstoff erzeugt ist.

3. Nahrungsmittelhülle gemäß Anspruch 1, **dadurch gekennzeichnet, daß** der Klebstoff neben Protein noch mindestens ein anderes Klebemittel natürlichen oder synthetisches Ursprungs, bevorzugt ein Poly(meth)acrylat, umfaßt.

4. Nahrungsmittelhülle gemäß Anspruch 1, **dadurch gekennzeichnet, daß** die flächenförmige Einlage aus Natur- und/oder Kunstfasern besteht, bevorzugt aus Baumwolle, Regenerat-Cellulose, Seide, Polyester, Polyamid, Polyolefin, Polyvinylacetat, Polyacrylnitril, Polyvinylchlorid, einem entsprechenden Copolymer oder einem Gemisch davon.

5. Nahrungsmittelhülle gemäß Anspruch 1, **dadurch gekennzeichnet, daß** die flächenförmige Einlage imprägniert ist.

6. Nahrungsmittelhülle gemäß einem oder mehreren der Ansprüche 1 bis 5, **dadurch gekennzeichnet, daß** die flächenförmige Einlage ein Gewicht 3 bis 400 g/m², bevorzugt 10 bis 130 g/m², besonders bevorzugt 12 bis 75 g/m², aufweist.

7. Nahrungsmittelhülle gemäß einem oder mehreren der Ansprüche 1 bis 6, **dadurch gekennzeichnet, daß** die Beschichtung als filmbildendes Protein Kollagen oder Gelatine, oder eine Mischung von Kollagen oder Gelatine mit einem natürlichen oder synthetischen Polymer, bevorzugt einem Acrylatharz, umfaßt.

8. Nahrungsmittelhülle gemäß Anspruch 7, **dadurch gekennzeichnet, daß** das natürliche oder synthetische Polymer ein Polyacrylat, Polyvinylacetat und/oder ein (Co-)Polymer mit Einheiten aus Vinylacetat und/oder aus Einheiten von verseiftem Vinylacetat ist.

9. Nahrungsmittelhülle gemäß Anspruch 1 oder 7, **dadurch gekennzeichnet, daß** der Anteil an filmbildendem Protein 2,5 bis 95 Gew.-%, beträgt, bevorzugt 20 bis 80 Gew.-%, besonders bevorzugt 30 bis 75 Gew.-%, jeweils bezogen auf das Trockengewicht der Hülle.

10. Nahrungsmittelhülle gemäß Anspruch 1 oder 7, **dadurch gekennzeichnet, daß** sie mindestens eine Verbindung enthält, die das filmbildende Protein vernetzt und dadurch dessen Wasserlöslichkeit vermindert oder aufhebt.

11. Nahrungsmittelhülle gemäß Anspruch 10, **dadurch gekennzeichnet, daß** die Verbindung, die das filmbildende Protein vernetzt, ein epoxidiertes Leinöl, ein Diketen mit (C₁₀-C₁₈)Alkylresten, Caramel, Tannin, ein Diepoxid, Citral, ein Aziridin, Glyoxal, Glutardialdehyd und/oder ein Polyamin-Polyamid-Epichlorhydrinharz ist.

12. Nahrungsmittelhülle gemäß einem oder mehreren der Ansprüche 1 bis 11, **dadurch gekennzeichnet, daß** sie Farbstoffe und/oder Pigmente enthält.

13. Nahrungsmittelhülle gemäß Anspruch 12, **dadurch gekennzeichnet, daß** der Anteil der Farbstoffe und/oder Pigmente 0,5 bis 12,0 Gew.-%, bevorzugt 1,0 bis 6,0 Gew.-%, beträgt, jeweils bezogen auf das Trockengewicht der Hülle.

14. Nahrungsmittelhülle gemäß einem oder mehreren der Ansprüche 1 bis 13, **dadurch gekennzeichnet, daß** sie innen und/oder außen imprägniert ist, bevorzugt mit Mitteln, die zur Einstellung der Bräthaftung oder zur Verbesserung der Schimmelresistenz dienen, und/oder Mitteln, die als übertragbare Farb-, Aroma-, Geruchs- und/oder Geschmacksstoffe dienen.

15. Nahrungsmittelhülle gemäß einem oder mehreren der Ansprüche 1 bis 14, **dadurch gekennzeichnet, daß** sie einen regelmäßig oder unregelmäßig wechselnden Durchmesser und/oder eine regelmäßig oder unregelmäßig wechselnde Kontur aufweist.

16. Nahrungsmittelhülle gemäß einem oder mehreren der Ansprüche 1 bis 15, **dadurch gekennzeichnet, daß** sie zu Abschnitten, Abbindungen oder Raupen konfektioniert ist.

17. Nahrungsmittelhülle gemäß einem oder mehreren der Ansprüche 1 bis 16, **dadurch gekennzeichnet, daß** sie mit einem Netz umhüllt ist, das wabenförmige, 8-eckige, quadratische und/oder rechteckige Strukturen umfaßt und gegebenenfalls elastisch ist.

18. Verfahren zur Herstellung der Nahrungsmittelhülle gemäß einem oder mehreren der Ansprüche 1 bis 15 , **dadurch gekennzeichnet, daß**
a) ein flächenförmiges Trägermaterial ein- oder beidseitig mit der Beschichtung versehen und das beschichtete Trägermaterial gegebenenfalls in Bahnen passender Breite geschnitten,
b) das beschichtete Trägermaterial oder daraus erhaltene Bahnen zu einem Schlauch mit überlappenden Längskanten geformt wird und
c) die überlappenden Längskanten durch Kleben fest miteinander verbunden werden.

19. Verwendung der Nahrungsmittelhülle gemäß einem oder mehreren der Ansprüche 1 bis 17 als künstliche Wursthülle, bevorzugt für Roh-, Brüh- oder Kochwurst, oder als Käsehülle.

## Claims

1. Smoke-permeable, tubular food casing, which is reinforced by a flat insert, wherein the flat insert is a consolidated nonwoven or spunbonded nonwoven, a woven fabric, loop-formingly knitted fabric, loop-drawingly knitted fabric, laid fabric or a porous film, wherein the flat insert is coated with a film-forming protein, but not regenerated or precipitated cellulose, and the casing, in a longitudinal direction, comprises a smoke-permeable transparent glued seam which is generated from adhesive comprising in the dry state 10 to 100 % by weight of protein, wherein the protein in the adhesive is blood plasma, collagen, gelatin, casein, soy protein, gluten, zein, ardein, pea protein, cottonseed or fish protein, protein from mussels, algae, fungae or other biomaterials from marine creatures or a mixture thereof, wherein the coated flat insert is shaped to form a tubular casing with overlapping longitudinal edges and the overlapping longitudinal edges are furnished with the adhesive and bonded to one another so that the smoke permeability is uniform over the entire periphery of the casing.

2. Food casing according to Claim 1, **characterized in that** the adhesive is generated from adhesive comprising in the dry state 50 to 95 % by weight, preferably 70 to 90 % by weight, of protein.

3. Food casing according to Claim 1, **characterized in that** the adhesive, in addition to protein, also comprises at least one other glue of natural or synthetic origin, preferably a poly(meth)acrylate.

4. Food casing according to Claim 1, **characterized in that** the flat insert comprises natural and/or synthetic fibers, preferably cotton, regenerated cellulose, silk, polyester, polyamide, polyolefin, polyvinyl acetate, polyacrylonitrile, polyvinyl chloride, a corresponding copolymer or a mixture thereof.

5. Food casing according to Claim 1, **characterized in that** the flat insert is impregnated.

6. Food casing according to one or more of Claims 1 to 5, **characterized in** the flat insert has a weight of 3 to 400 g/m2, preferably 10 to 130 g/m2, particularly preferably 12 to 75 g/m2.

7. Food casing according to one or more of Claims 1 to 6, **characterized in that** the coating comprises as the film-forming protein collagen or gelatin or a mixture of collagen or gelatin with a natural or synthetic polymer, preferably an acrylate resin.

8. Food casing according to Claim 7, **characterized in that** the natural or synthetic polymer is a polyacrylate, polyvinyl acetate and/or a (co)polymer having units of vinyl acetate and/or units of saponified vinyl acetate.

9. Food casing according to Claim 1 or 7, **characterized in that** the fraction of film-forming protein is 2.5 to 95 % by weight, preferably 20 to 80 % by weight, particularly preferably 30 to 75 % by weight, in each case based on the dry weight of the casing.

10. Food casing according to Claim 1 or 7, **characterized in that** it contains at least one compound which crosslinks the film-forming protein and as a result reduces or increases its water solubility.

11. Food casing according to Claim 10, **characterized in that** the compound which crosslinks the film-forming protein is an epoxidized linseed oil, a diketene having (C10-C18)alkyl radicals, caramel, tannin, a diepoxide, citral, an aziridine, glyoxal, glutaraldehyde and/or a polyamine-polyamide epichlorohydrin resin.

12. Food casing according to one or more of Claims 1 to 11, **characterized in that** it comprises dyes and/or pigments.

13. Food casing according to Claim 12, **characterized in that** the fraction of dyes and/or pigments is 0.5 to 12.0 % by weight, preferably 1.0 to 6.0 % by weight, in each case based on the dry weight of the casing.

14. Food casing according to one or more of Claims 1 to 13, **characterized in that** it is impregnated internally and/or externally, preferably with agents which serve for setting the sausagemeat emulsion adhesion or improving mould resistance, and/or agents which serve as transferable dyes, aroma substances, odour substances and/or taste substances.

15. Food casing according to one or more of Claims 1 to 14, **characterized in that** it has a regularly or irregularly changing diameter and/or a regularly or irregularly changing contour.

16. Food casing according to one or more of Claims 1 to 15, **characterized in that** it is finally processed to give cut-off sections, tied-off sections or shirred sticks.

17. Food casing according to one or more of Claims 1 to 16, **characterized in that** it is enveloped by a net which comprises honeycomb-shaped, octagonal, square and/or rectangular structures and if appropriate is elastic.

18. Process for producing the food casing according to one or more of Claims 1 to 15, **characterized in that**
a) a flat support material is furnished on one or both sides with the coating and the coated support material is optionally cut into strips of appropriate width,
b) the coated support material or strips obtained therefrom are shaped to form a tube having overlapping longitudinal edges and
c) the overlapping longitudinal edges are firmly bound to one another by gluing.

19. Use of the food casing according to one or more of Claims 1 to 17 as artificial sausage casing, preferably for raw sausage, scalded emulsion sausage or cookedmeat sausage, or as cheese casing.

## Revendications

1. Enveloppe tubulaire pour aliments perméable à la fumée, qui est renforcée par un insert en forme de feuille, l'insert en forme de feuille étant un tissu non tissé ou tissu filé-lié solidifié, un tissu tissé, un tissu à mailles, un tissu tricoté, un canevas ou un film poreux, l'insert en forme de feuille étant recouvert d'une protéine filmogène, mais aucune cellulose régénérée ou précipitée, et l'enveloppe comprenant dans le sens longitudinal une suture collée transparente perméable à la fumée, qui est produite avec un adhésif constitué de 10 à 100 % en poids de protéines à l'état sec, les protéines étant du plasma sanguin, du collagène, de la gélatine, de la caséine, des protéines de soja, du gluten, de la zéine, de l'ardéine, des protéines de pois, des protéines de graine de coton ou de poisson, des protéines de moules, algues, champignons ou autres biomatériaux d'animaux marins ou un mélange de ceux-ci, l'insert en forme de feuille revêtu étant formé en une enveloppe tubulaire avec des bords longitudinaux qui se chevauchent et les bords longitudinaux qui se chevauchent étant appliqués avec l'adhésif et collés ensemble afin que la perméabilité à la fumée soit uniforme sur toute la périphérie de l'enveloppe.

2. Enveloppe pour aliments selon la revendication 1, **caractérisée en ce que** l'adhésif à l'état sec est produit de 50 à 95 % en poids, de préférence de 70 à 90 % en poids, d'adhésif constitué de protéines.

3. Enveloppe pour aliments selon la revendication 1, **caractérisée en ce que** l'adhésif comprend, en plus de protéines, au moins une autre colle d'origine naturelle ou synthétique, de préférence un poly(méth)acrylate.

4. Enveloppe pour aliments selon la revendication 1, **caractérisée en ce que** l'insert en forme de feuille est constitué de fibres naturelles et/ou synthétiques, de préférence de coton, de cellulose régénérée, de soie, de polyester, de polyamide, de polyoléfine, d'acétate de polyvinyle, de polyacrylonitrile, de chlorure de polyvinyle, d'un copolymère correspondant ou d'un mélange de ceux-ci.

5. Enveloppe pour aliments selon la revendication 1, **caractérisée en ce que** l'insert en forme de feuille est imprégné.

6. Enveloppe pour aliments selon une ou plusieurs des revendications 1 à 5, **caractérisée en ce que** l'insert en forme de feuille a un poids de 3 à 400 g/m², de préférence de 10 à 130 g/m², le plus préférentiellement de 12 à 75 g/m².

7. Enveloppe pour aliments selon une ou plusieurs des revendications 1 à 6, **caractérisée en ce que** le revêtement comprend du collagène ou de la gélatine comme protéine filmogène, ou un mélange de collagène ou de gélatine avec un polymère naturel ou synthétique, de préférence une résine acrylate.

8. Enveloppe pour aliments selon la revendication 7, **caractérisée en ce que** le polymère naturel ou synthétique est un polyacrylate, un polyacétate de vinyle et/ou un (co)polymère avec des unités d'acétate de vinyle et/ou des unités d'acétate de vinyle saponifié.

9. Enveloppe pour aliments selon la revendication 1 ou 7, **caractérisée en ce que** la part de protéine filmogène est de 2,5 à 95 % en poids, de préférence de 20 à 80 % en poids, le plus préférentiellement de 30 à 75 % en poids, dans chaque cas sur la base du poids sec de l'enveloppe.

10. Enveloppe pour aliments selon la revendication 1 ou 7, **caractérisée en ce qu'**elle contient au moins un composé qui réticule la protéine filmogène et réduit ou supprime ainsi sa solubilité dans l'eau.

11. Enveloppe pour aliments selon la revendication 10, **caractérisée en ce que** le composé réticulant la protéine filmogène est une huile de lin époxydée, un dicétène avec des radicaux alkyles (C₁₀.C₁₈), du caramel, des tanins, un diépoxyde, du citral, une aziridine, du glyoxal, du glutardialdéhyde et/ou une résine polyamine-polyamide-épichiorhydrine.

12. Enveloppe pour aliments selon une ou plusieurs des revendications 1 à 11, **caractérisée en ce qu'**elle contient des colorants et/ou des pigments.

13. Enveloppe pour aliments selon la revendication 12, **caractérisée en ce que** la part de colorants et/ou pigments est de 0,5 à 12,0 % en poids, de préférence de 1,0 à 6,0 % en poids, dans chaque cas sur la base du poids sec de l'enveloppe.

14. Enveloppe pour aliments selon une ou plusieurs des revendications 1 à 13, **caractérisée en ce qu'**elle est imprégnée à l'intérieur et/ou à l'extérieur, de préférence avec des agents servant à ajuster l'adhérence de la viande ou à améliorer la résistance aux moisissures, et/ou des agents servant de colorants, d'arômes, de parfums et/ou d'aromatisants transférables.

15. Enveloppe pour aliments selon une ou plusieurs des revendications 1 à 14, **caractérisée en ce qu'**elle a un diamètre changeant régulièrement ou irrégulièrement et/ou un contour changeant régulièrement ou irrégulièrement,

16. Enveloppe pour aliments selon une ou plusieurs des revendications 1 à 15, **caractérisée en ce qu'**elle est constituée de sections, de reliures ou de chenilles.

17. Enveloppe pour aliments selon une ou plusieurs des revendications 1 à 16, **caractérisée en ce qu'**elle est recouverte d'un filet comprenant des structures en nid d'abeilles, octogonales, carrées et/ou rectangulaires et est éventuellement élastique.

18. Procédé de fabrication de l'enveloppe pour aliments selon une ou plusieurs des revendications 1 à 15, **caractérisé en ce que**
a) un matériau de support en forme de feuille est pourvu du revêtement sur une ou deux faces et le matériau de support revêtu est éventuellement découpé en bandes de largeur appropriée,
b) le matériau de support revêtu ou les bandes obtenues à partir de celui-ci est formé en un tube avec des bords longitudinaux se chevauchant et
c) les bords longitudinaux se chevauchant sont fermement reliés entre eux par collage.

19. Utilisation de l'enveloppe pour aliments selon une ou plusieurs des revendications 1 à 17 comme boyau de saucisse artificiel, de préférence pour saucisse crue, à bouillir ou cuite, ou comme enveloppe de fromage.
